# EUROPÄISCHE PATENTSCHRIFT

(11) **EP 4 584 044 B1**
(45) Veröffentlichungstag und Bekanntmachung des Hinweises auf die Patenterteilung: **19.08.2026**
(21) Anmeldenummer: 23764847.2
(22) Anmeldetag: 29.08.2023
(51) Int. Cl.: B23K 26/00, B23K 26/0622, B23K 26/064, B23K 26/06, B23K 26/354, B23K 26/362, B23K 26/402, C03C 23/00, B23K 103/00

(54) **VERFAHREN ZUM ERZEUGEN VON DIMPLES AUF DER OBERFLÄCHE EINES TRANSPARENTEN MATERIALS**
METHOD FOR PRODUCING DIMPLES ON THE SURFACE OF A TRANSPARENT MATERIAL
PROCÉDÉ DE PRODUCTION D'ALVÉOLES À LA SURFACE D'UN MATÉRIAU TRANSPARENT

(30) Priorität: 09.09.2022 DE 102022122965
(43) Veröffentlichungstag der Anmeldung: 16.07.2025
(73) Patentinhaber: TRUMPF Laser GmbH, 78713 Schramberg (DE)
(72) Erfinder: KLEINER, Jonas, 71229 Leonberg (DE); ZIMMERMANN, Felix, 71254 Ditzingen (DE); KAHMANN, Max, 71154 Nufringen (DE); FLAMM, Daniel, 71640 Ludwigsburg (DE); KAISER, Myriam, 71296 Heimsheim (DE); GROSSMANN, Daniel, 78713 Schramberg (DE)
(74) Vertreter: Trumpf Patentabteilung
(86) Internationale Anmeldenummer: PCT/EP2023/073718
(87) Internationale Veröffentlichungsnummer: WO 2024/052177

(56) Entgegenhaltungen:
- DE-A1- 102020 123 789
- US-A1- 2014 217 058
- US-A1- 2018 149 793
- US-A1- 2020 399 175

## Beschreibung

### Technisches Gebiet

Die vorliegende Erfindung betrifft das Erzeugen von Dimples auf der Oberfläche eines transparenten Materials entsprechend dem Oberbegriff des Anspruchs 1, siehe z.B. US 2020/399175 A1.

### Stand der Technik

Es ist bekannt, dass bei der Lasermaterialbearbeitung Material eines Bauteils abgetragen werden kann, indem durch eine starke Licht-Materie-Wechselwirkung das Material innerhalb der Fokuszone eines Laserstrahls verdampft wird. Die so entstehenden Strukturen Vertiefungen werden Dimples genannt.

Es ist ferner bekannt, dass durch eine sukzessive Wechselwirkung desselben Materialbereichs mit mindestens zwei Laserpulsen sogenannte laserinduzierte periodische Oberflächenstrukturen (laser-induced periodic surface structures, im Folgenden "LIPSS" genannt) erzeugt werden können. Dimples und LIPSS eignen sich hierbei zur Funktionalisierung von Oberflächen von Bauteilen, wobei insbesondere optische Eigenschaften, Benetzungseigenschaften und tribologische Eigenschaften beeinflusst werden können.

Aus der DE 10 2017 006 358 A1 ist ein Verfahren zur Erzeugung einer strukturierten Oberfläche auf einem Substrat bekannt, bei dem Oberflächenstrukturen mit Abmessungen im SubMikrometerbereich durch Behandlung mit einem intensiven gepulsten Laserstrahl erzeugt werden. Aus der EP 3 270 016 B1 ist ein Verfahren zur Bearbeitung eines Gleitbauteils bekannt, wobei das Gleitbauteil ein Paar Gleitteile aufweist und das Gleitbauteil eine Vielzahl von Vertiefungen aufweist, die durch Bestrahlung mit einem von einem Ultrakurzpuls-Laseroszillator erzeugten Ultrakurzpuls-Laser gebildet werden.

Aus der US 2018/0118612 A1 ist ein Verfahren bekannt, um eine Glasoberfläche oleophob/hydrophob zu machen. Bei dem Verfahren wird die Glasoberfläche mit einem Femtosekunden-UV-Excimer-Laser beaufschlagt, um Teile der Glasoberfläche zu verdampfen und um Nanostrukturen in der Glasoberfläche zu bilden, wobei die optische Klarheit der Glasoberfläche nicht wesentlich verringert wird.

### Darstellung der Erfindung

Ausgehend von dem bekannten Stand der Technik ist es eine Aufgabe der vorliegenden Erfindung, ein verbessertes Verfahren bereitzustellen.

Die Aufgabe wird durch ein Verfahren mit den Merkmalen des Anspruchs 1 gelöst. Vorteilhafte Weiterbildungen ergeben sich aus den Unteransprüchen.

Entsprechend wird das Erzeugen von Dimples auf der Oberfläche eines transparenten Materials mit Laserpulsen eines Kurzpulslasers vorgeschlagen, wobei mit einem einzigen Laserpuls oder einem einzigen Laserburst mindestens ein Dimple erzeugt wird.

Das transparente Material des Bauteils kann hierbei ein Material wie beispielsweise ein Polymer oder ein Kunststoff sein. Das zu bearbeitende Material kann auch ein Halbleiter sein, beispielsweise ein elementarer Halbleiter wie Silizium oder Germanium, oder ein III-V-Halbleiter wie Galliumarsenid, oder ein organischer Halbleiter oder jede andere Art von Halbleiter sein. Beispielsweise kann das Material ein Silizium-Wafer sein. Insbesondere kann das Material ein Schichtsystem sein, wobei jede Schicht gewählt werden kann aus der Gruppe der Metalle, Polymere, Kunststoffe oder Halbleiter. Insbesondere kann das Material auch ein Glas sein, beispielsweise Saphir oder Quarzglas sein.

Transparent kann hierbei bedeuten, dass das Material optisch transparent ist, also transparent für die vom menschlichen Auge sichtbare Wellenlängen ist. Beispielsweise kann das Material sichtbares Licht mehr als 80% oder mehr als 85% oder mehr als 90% oder mehr als 95% oder mehr als 99% transmittieren. Transparent kann aber auch bedeuten, dass das Material transparent für die Wellenlänge eines Bearbeitungslasers ist.

Der Kurzpulslaser stellt die Laserpulse des Laserstrahls zur Verfügung, wobei die einzelnen Laserpulse den Laserstrahl in der Strahlausbreitungsrichtung ausbilden.

Die Pulsdauer der Laserpulse kann zwischen 300fs und 10ps betragen oder zwischen 100ps und 100ns betragen.

In dem Bereich zwischen 300fs und 10ps können hierbei besonders einfach LIPSS erzeugt werden, während die Pulsdauer zwischen 100ps und 100ns besonders gut für das Erzeugen von Dimples mit einem UV-Laser geeignet ist.

Die Wellenlänge der Laserpulse kann zwischen 300nm und 3000nm betragen, bevorzugt zwischen 900nm und 2200nm betragen.

Dadurch kann eine Laserwellenlänge gewählt werden, bei der das Material transparent ist, so dass die Dimples und die LIPSS über eine nichtlineare Wechselwirkung in das Material eingebracht werden können. Zudem kann durch die kurze Pulsdauer eine ungewollte Erwärmung des Materials vermieden werden, die der Ausbildung der LIPSS entgegenwirkt.

Anstatt einzelner Laserpulse kann der Laser auch Laserbursts zur Verfügung stellen, wobei jeder Burst das Aussenden mehrerer Laserpulse umfasst. Dabei kann für ein bestimmtes Zeitintervall das Aussenden der Laserpulse sehr dicht, im Abstand weniger Piko- bis Nanosekunden, aufeinander folgen. Bei den Laserbursts kann es sich insbesondere um GHz-Bursts handeln, bei denen die Abfolge der aufeinanderfolgenden Laserpulse des jeweiligen Bursts im GHz Bereich stattfindet.

Ein Burst kann beispielsweise zwischen 2 und 10 Laserpulse umfassen, wobei der zeitliche Abstand der Laserpulse zwischen 10ns und 50ns betragen kann.

Ein Burst kann aber auch zwischen 30 und 300 Laserpulse umfassen, wobei der zeitliche Abstand der Laserpulse zwischen 100ps und 1000ps betragen kann.

Beispielsweise kann die Länge der Laserpulse zwischen 100ps und 100ns betragen, insbesondere zwischen 1ns und 20ns betragen, wobei die Wellenlänge zwischen 300nm und 550nm betragen kann, insbesondere 355nm betragen kann, wobei die Repetitionsrate der Laserpulse zwischen 10kHz und 100kHz betragen kann, insbesondere zwischen 10kHz und 50kHz betragen kann, wobei die Laserpulse eine Energie zwischen 60µJ und 300µJ aufweisen können und pro Spot 1 bis 4 Pulse abgegeben werden können.

Beispielsweise kann die Länge der Laserpulse zwischen 200fs und 1000fs betragen, insbesondere zwischen 300fs und 450fs betragen, wobei die Wellenlänge zwischen 900nm und 2300nm betragen kann, insbesondere 1030nm betragen kann, wobei die Repetitionsrate der Laserpulse zwischen 10kHz und 400kHz betragen kann, wobei die Laserpulse in Laserbursts abgegeben werden, wobei jeder Laserburst zwischen 2 und 4 Laserpulsen enthalten kann, wobei die Laserbursts eine Energie zwischen 100µJ und 400µJ aufweisen können und die numerische Apertur zwischen 0,01 und 0,2 betragen kann, insbesondere 0,08 betragen kann.

Insbesondere wirken die Laserpulse eines Laserbursts durch die schnelle Pulsabfolge zusammen auf das Material ein.

Die Laserpulse werden in das Material eingebracht, wobei die Energie des Laserstrahls in dem Material mindestens teilweise absorbiert wird, beispielsweise durch nichtlineare Wechselwirkungen, insbesondere durch Multiphotonprozesse.

Der Fokus des Laserstrahls kann dabei in Strahlausbreitungsrichtung über der Oberfläche des zu bearbeitenden Materials liegen oder unter der Oberfläche im Volumen des zu bearbeitenden Materials liegen. Die Fokusposition kann auch genau auf der Oberfläche des zu bearbeitenden Materials liegen. Insbesondere kann die Fokusposition innerhalb der zehnfachen Rayleigh-Länge von der Oberfläche entfernt sein, wobei die Rayleigh-Länge die Distanz entlang der optischen Achse ist, die ein Laserstrahl braucht, bis seine Querschnittsfläche sich, ausgehend von der Strahltaille bzw. dem Fokus, verdoppelt.

Insbesondere kann der Begriff "Fokus" im Allgemeinen als eine gezielte Intensitätsüberhöhung verstanden werden, wobei die Laserenergie in einen "Fokusbereich" konvergiert. Insbesondere wird daher im Folgenden der Ausdruck "Fokus" unabhängig von der tatsächlich verwendeten Strahlform und den Methoden zur Herbeiführung einer Intensitätsüberhöhung verwendet. Durch eine "Fokussierung" kann auch der Ort der Intensitätserhöhung entlang der Strahlausbreitungsrichtung beeinflusst werden. Beispielsweise kann die Intensitätsüberhöhung quasi punktförmig sein und der Fokusbereich einen Gauß-förmigen Intensitätsquerschnitt aufweisen, wie er von einem Gauß'schen Laserstrahl zur Verfügung gestellt wird. Die Intensitätsüberhöhung kann auch linienförmig ausgebildet sein, wobei sich um die Fokusposition ein Besselförmiger Fokusbereich ergibt, wie er von einem nicht-beugenden Strahl zur Verfügung gestellt werden kann. Des Weiteren sind auch andere komplexere Strahlformen möglich, deren Fokusposition sich in drei Dimensionen erstreckt, wie beispielsweise ein Multi-Spot-Profil aus Gauß'schen Laserstrahlen und/oder nicht Gauß'schen Intensitätsverteilungen.

Durch die absorbierte Energie des Laserstrahls erwärmt sich das Material entsprechend der Intensitätsverteilung des Lasers und/oder geht wegen der elektromagnetischen Wechselwirkung des Lasers mit dem Material in einen temporären Plasmazustand über. Insbesondere können also neben linearen Absorptionsprozessen auch nicht-lineare Absorptionsprozesse verwendet werden, die durch die Nutzung hoher Laserenergien beziehungsweise Laserintensitäten zugänglich werden. Das Material wir dementsprechend besonders im Fokus des Lasers modifiziert, da dort die Intensität des Laserstrahls am größten ist. Insbesondere kann dadurch erreicht werden, dass ein Teil des Materials aus dem Verbund des Materials herausgelöst werden kann, beispielsweise schmilzt oder verdampft wird. Damit sind bezüglich der Wechselwirkung zwischen dem Laserlicht und dem zu bearbeitenden Material an sich bekannte Bearbeitungsprozesse möglich, die beispielsweise als Laserbohren, Perkussionsbohren oder Laserablation bekannt sind.

Durch die Wechselwirkung eines einzigen Laserpulses oder eines einzigen Laserbursts mit dem zu bearbeitenden Material wird auf der Oberfläche des transparenten Materials mindestens ein Dimple erzeugt.

Ein Dimple entsteht durch die Verdampfung von Material an der Oberfläche durch die eingestrahlte Laserintensität. Das Material wird insbesondere dort verdampft, wo die Intensität des Laserstrahls eine kritische, materialspezifische Bearbeitungsschwelle überschreitet. Dementsprechend ist die Form und Gestalt des Laserstrahls, insbesondere des Strahlprofils ausschlaggebend für die Form und Gestalt der Dimples.

Im einfachsten Fall ist der Laserstrahl ein Gauß'scher Laserstrahl mit einem Gauß'schen Strahlprofil. Um den Fokuspunkt herum ist ein gewisser räumlicher Bereich, in dem die Laserenergie oberhalb der kritischen Schwelle liegt. Mit anderen Worten gibt es in der Intensitätsverteilung des Laserstrahls im Fokus eine Isointensitätsfläche innerhalb der das Material verdampft werden kann. Aus dieser Isointenistätsfläche ergibt sich damit die Form und Gestalt des Dimples.

Insbesondere können Dimples daher einen runden, elliptischen oder eckigen, insbesondere quadratisschen, oder eckig-abgerundeten Querschnitt in der Ebene der Materialoberfläche aufweisen, wobei die Dimples vom Rand zum Zentrum hin eine zunehmende Tiefe aufweisen. Insbesondere kann der Querschnitt der Dimples in der Ebene senkrecht zur Oberfläche ebenfalls rund oder gerundet sein.

Durch das Einbringen von Dimples auf die Oberfläche des Materials können beispielsweise die optischen Eigenschaften des Materials bestimmt werden, beispielsweise indem durch ein transparentes Material geleitetes Licht an den Dimples gestreut wird und so das Material diffus und/oder matt erscheinen lassen. Insbesondere könne Dimples auf der Oberfläche des Materials die Reflexion an dem Material unterdrücken.

Beispielsweise können die mindestens zwei Laserpulse eines Laserbursts räumlich überlappen wodurch dadurch sogenannte LIPSS erzeugt werden können. Dies geschieht, wenn in dem ersten Dimple ein angeregter plasmonischer Zustand vorliegt, mit dem ein zweiter Laserpuls des Laserbursts wechselwirken kann, so dass sich das erhitzte Material entlang des elektrischen Feldes des zweiten Laserpulses orientiert.

Die Kombination aus Dimples und LIPSS kann für eine komplexe Funktionalisierung der Oberfläche des transparenten Materials eingesetzt werden.

Beispielsweise kann durch die Art und Gestalt der Dimples, sowie der Verteilung der Dimples auf der Oberfläche des Materials, die Haptik beziehungsweise die Rauigkeit eingestellt werden. Es ist aber auch möglich die Streuung des Lichts und somit die optischen Eigenschaften des Materials einzustellen.

Durch die Größe der LIPSS hingegen kann beispielsweise eine weitere Funktionalisierung der Oberfläche erreicht werden. Beispielsweise können durch LIPSS die Benetzungseigenschaften einer Oberfläche eingestellt werden, da die LIPSS den Kontaktwinkel zwischen einer Flüssigkeit und dem Material verändern. Zudem können auch tribologische Eigenschaften des Materials verändert werden und beispielsweise die Gleitfähigkeit des Materials eingestellt werden.

Durch die Kombination aus Dimples und LIPSS lässt sich die Oberfläche des transparenten Materials somit optisch und mechanisch funktionalisieren.

Insbesondere können die Dimples und LIPSS durch das vorliegende Verfahren besonders effizient erzeugt werden.

Zudem kann der Laser eine lineare Polarisation aufweisen, beispielsweise kann der Polarisationsgrad des Laserstrahls mehr als 80%, bevorzugt mehr als 95% betragen.

Durch die hohe lineare Polarisation können besonders einfach LIPSS in den Dimples erzeugt werden.

Es kann aber auch sein, dass der Laserstrahl zirkular oder elliptisch polarisiert ist und lediglich Dimples erzeugt werden.

Die mittlere emittierte Laserleistung am Laserausgang beträgt entsprechend der Erfindung zwischen 30W und 1000W, bevorzugt zwischen 30W und 300W betragen.

Durch die hohe mittlere Leistung ist es beispielsweise möglich aus einem einzigen Laserstrahl eine Mehrzahl von Teillaserstrahlen zu formen, wobei jeder Teillaserstrahl einen eigenen Dimple erzeugen kann. Insbesondere ist es dadurch auch möglich unter einem großen Vorschub zu arbeiten, so dass die Energie des Laserstrahls auf eine große Fläche verteilt werden kann.

Der angegebene Leistungsbereich entspricht ferner einem handelsüblichen Kurzpulslaser, so dass die Kosten des Verfahrens gering gehalten werden können.

In einer bevorzugten Ausführungsform des Verfahrens beträgt die Laserpulsdauer zwischen 300fs und 10ps bei einer Wellenlänge zwischen 900nm und 1200nm oder zwischen 100ps und 100ns bei einer Wellenlänge zwischen 300nm und 520nm, wobei der mindestens eine Dimple mit einem Laserburst erzeugt wird und der Laserburst zwischen 2 und 10 Laserpulse umfasst, wobei der zeitliche Abstand der Laserpulse zwischen 10ns bis 50ns beträgt, wobei bevorzugt der Polarisationsgrad des Lasers mehr als 80% beträgt.

In einer weiteren bevorzugten Ausführungsform des Verfahrens beträgt die Laserpulsdauer zwischen 300fs und 10ps oder zwischen 100ps und 100ns, wobei der mindestens eine Dimple mit einem Laserburst erzeugt wird und der der Laserburst zwischen 30 und 300 Laserpulse umfasst und der zeitliche Abstand der Laserpulse zwischen 100ps bis 1000ps beträgt, wobei bevorzugt der Polarisationsgrad des Lasers mehr als 80% beträgt.

In einer besonders bevorzugten Ausführungsform des Verfahrens beträgt die Laserpulsdauer zwischen 300fs und 10ps, wobei der mindestens eine Dimple mit einem Laserburst erzeugt wird und der Laserburst zwischen 2 und 10 Laserpulse umfasst, wobei der zeitliche Abstand der Laserpulse zwischen 10ns bis 50ns beträgt und der Polarisationsgrad des Lasers mehr als 95% beträgt und die mittlere emittierte Laserleistung am Laserausgang zwischen 30W und 300W beträgt.

Die Photonenenergie der Laserpulse oder Laserbursts kleiner als die Bandlücke des Materials ist. Die Bandlücke ist hierbei der energetische Abstand zwischen Valenzband und Leistungsband des Materials, wobei die elektrischen und optischen Eigenschaften wesentlich durch die Größe der Bandlücke bestimmt ist.

Wenn die Photonenenergie des Lasers kleiner als die Bandlücke ist, dann kann das Photon nicht von dem Festkörper absorbiert werden, so dass das Material transparent für die Wellenlänge des Lasers erscheint.

Beispielsweise kann die Bandlücke bei Quarzglas etwa 9eV entsprechen, so dass eine optische Absorption erst bei Photonenenergien von mehr als 9eV möglich ist. Die Bandlücke entspricht einer Wellenlänge von etwa 137nm, so dass Quarzglas für Photonen geringerer Energie, also größerer Wellenlänge, transparent ist.

Die Dimples können eine Tiefe zwischen 100nm und 2000nm aufweisen, bevorzugt zwischen 200nm und 1000nm aufweisen.

Dadurch kann besonders vorteilhaft eine Rauigkeit der Oberfläche eingestellt werden, wobei eine weitgehende Materialschwächung vermieden werden kann.

Die Dimples können einen Durchmesser zwischen 3µm und 30µm aufweisen, bevorzugt zwischen 3µm und 10µm aufweisen.

Dadurch kann der Durchmesser besonders vorteilhaft auf die für die Funktionalisierung erforderliche Mikrostruktur eingestellt werden.

Die Dimples können eine Größenvariation zum Durchmesser zwischen 5% und 80% aufweisen.

Beispielsweise kann die Größenvariation 50% betragen und der Durchmesser der Dimples 20µm betragen. Dann können die Dimples auf der Oberfläche mit Durchmessern zwischen 10µm und 30µm vorliegen
Die LIPSS können eine Periodizität zwischen 40nm und 1000nm aufweisen, bevorzugt zwischen 50nm und 300nm aufweisen.

Die Periodizität bestimmt sich hierbei aus dem Abstand zweier benachbarter Täler oder Berge im Profil einer LIPSS. Durch die Periodizität kann besonders vorteilhaft die Funktionalisierung der Oberfläche eingestellt werden. Beispielsweise kann eine LIPSS eine Periodizität für den medizinischen Bereich eine Periodizität von 100nm aufweisen, so dass die Oberfläche besonders hygrophil wirkt. Dadurch kann eine so behandelte Oberfläche beispielsweise besonders vorteilhaft in Endoskopen oder Laryngoskopen eingesetzt werden, so dass die entsprechend behandelten Oberflächen eine flüssigkeitsabweisende Wirkung aufweisen und dementsprechend beim Einsatz im Körper beispielsweise einen freien Blick in das Körperinnere ermöglichen. Insbesondere ist eine solche funktionalisierte Oberfläche dementsprechend besonders geeignet für den Einsatz in medizinischen Geräten, die einen optischen Zugang in das Körperinnere ermöglichen.

In einer bevorzugten Ausführungsform weisen die Dimples einen Durchmesser zwischen 13µm und 20µm auf, wobei die laserinduzierten periodischen Oberflächenstrukturen eine Periodizität zwischen 650nm und 1000nm aufweisen.

Die Rauigkeit des transparenten Bauelements kann zwischen 0,05µm und 1,5µm betragen.

Dadurch kann ein besonders wertiger haptischer Eindruck der Oberfläche erzeugt werden.

Die Oberflächenrauigkeit kann hierbei definiert sein als peak-to-valley Wert, sprich als die Distanz der höchsten Erhebung zur niedrigsten Vertiefung. Es kann aber auch sein, dass die Rauigkeit definiert ist als die Standartabweichung der Tiefe der Dimples.

Die Flächenfüllung der Oberfläche mit Dimples kann zwischen 20% und 95% betragen.

Die Flächenfüllung der Oberfläche ist hierbei gegeben durch das Flächenverhältnis aus bearbeiteter Oberfläche durch die Dimples und der Gesamtoberfläche des transparenten Materials. Je nach gewünschter Rauigkeit oder Funktionalisierung kann die Flächenfüllung der Oberfläche angepasst werden.

Insbesondere können bei der Bearbeitung der Oberfläche die Dimples auch sukzessive oder in mehreren Überfahrten eingebracht werden, wobei die Flächenbelegung sukzessive erhöht wird, wobei ein Verzerren oder Verschmieren der Dimples reduziert wird.

Insbesondere können mindestens zwei Dimples räumlich überlappen.

Räumlich überlappen kann bedeuten, dass sich die Dimples am Rand berühren, oder dass die Dimples flächig teilweise übereinander liegen, also eine flächige Schnittmenge der Dimples existiert.

Die LIPSS können die Dimples zu weniger als 90% bedecken.

Beispielsweise können die LIPSS in dem Dimple zentriert sein. Beispielsweise kann ein Dimple einen Durchmesser von 10µm aufweisen, wohingegen die LIPSS nur in einem Flächenbereich mit einem Durchmesser von 9µm anzutreffen sind.

Es ist aber auch möglich, dass zwei Dimples überlappen und lediglich in dem räumlichen Überlapp LIPSS geformt werden.

Der Laserstrahl und das Material können relativ zueinander mit einer Vorschubvorrichtung verschoben werden.

Relativ zueinander verschiebbar bedeutet, dass sowohl der Laserstrahl translatorisch relativ zu einem ortsfesten Material verschoben werden kann als auch das Material relativ zum Laserstrahl verschoben werden kann, oder es findet eine Bewegung sowohl des Materials als auch des Laserstrahls statt.

Dadurch kann insbesondere der Fokus des Laserstrahls an verschiedenen Orten des Materials platziert werden, um Laserpulse einzubringen. Beispielsweise können die Laserpunkte zufällig um eine Vorschubtrajektorie verteilt in das Material eingebracht werden, wobei die Vorschubtrajektorie gerade oder gekrümmt sein kann. Beispielsweise kann dadurch der Laserstrahl entlang mit einem Vorschub bewegt werden, während die Laserpulse in oder auf das Material abgegeben werden.

Die Vorschubvorrichtung kann bevorzugt eine Achsvorrichtung und/oder eine Scannervorrichtung umfassen.

Mit der Achsvorrichtung kann beispielsweise das Material mechanisch bewegt werden, während mit einer Scannervorrichtung der Laserstrahl über das Material bewegt wird. Insbesondere kann die Achsvorrichtung ein XYZ-Tisch mit Schrittmotorsteuerung sein. Es kann aber auch sein, dass die Achsvorrichtung mit Piezoverstellungen ausgebildet ist, um eine möglichst schnelle Verstellung zu erreichen. Die Scannervorrichtung kann insbesondere ein Galvanoscanner sein.

Der Laserstrahl kann durch eine Bearbeitungsoptik auf die Oberfläche des Materials fokussiert werden.

Die Bearbeitungsoptik kann hierbei insbesondere eine Linse sein oder ein Objektiv sein oder ein Teleskop sein. Insbesondere kann die Bearbeitungsoptik in Strahlausbreitungsrichtung hinter der optionalen Strahlformungsvorrichtung angeordnet werden und vor der Oberfläche des transparenten Materials.

Die Dimples können zufällig auf der Oberfläche des transparenten Materials angeordnet werden.

Eine zufällige Anordnung kann vorliegen, wenn die räumlichen Abstände der Dimples zueinander eine zufällige Größe aufweisen. Die räumlichen Abstände ergeben sich etwa aus den Mittelpunktsabständen oder den Mindestabständen von Dimplerand zu Dimplerand.

Insbesondere ergibt sich beispielsweise aus der räumlichen Verteilung der Dimples, inklusive der Größe der Dimples, über eine Fouriertransformation eine Ortsfrequenzverteilung der Dimples. Je unregelmäßiger die Abstände der Dimples zueinander sind, desto größer ist die Bandbreite der Ortsfrequenzverteilung und desto diffuser wird ein einfallender Lichtstrahl von dem transparenten Material reflektiert.

Insbesondere kann "zufällig angeordnet" demnach bedeuten, dass die Dimples im Ortfrequenzraum zufällig verteilt sind. Durch eine Darstellung der Position der Dimples im Ortsfrequenzraum ist es zudem möglich, potentielle Raumrichtungen zu identifizieren entlang derer es zu Interferenzen des reflektierten oder transmittierten Lichts kommen könnte, um die Anordnung zu optimieren.

Zufällig verteilt kann auch bedeuten, dass die räumliche Verteilung der Dimples einer Zufallsverteilung folgt, beispielsweise einer Gleichverteilung einer Gaußverteilung oder einer Dreiecksverteilung oder einer anderen statistischen Verteilung der Dimples auf der Oberfläche des transparenten Materials.

Der Laserstrahl kann mittels einer Strahlformungsvorrichtung in eine Multifokusverteilung geformt werden und die Oberfläche kann mit der Multifokusverteilung beaufschlagt werden und somit mehrere Dimples mit einem einzigen Laserpuls oder einem einzigen Laserburst erzeugen.

Die Multifokusverteilung ist eine räumliche Verteilung von einzelnen Fokuszonen, sogenannten Einzelfoki. Die Multifokusverteilung umfasst mindestens zwei Einzelfoki, wobei die Einzelfoki räumlich getrennt voneinander sind. Die Einzelfoki können jedoch alle in einer Fokusebene liegen, so dass die Einzelfoki alle in einer Ebene entlang der Strahlausbreitungsrichtung des Laserstrahls anzutreffen sind, jedoch unterschiedliche Koordinaten auf der Oberfläche des transparenten Materials aufweisen.

Eine Multifokusverteilung kann durch eine Strahlformungsvorrichtung bereitgestellt werden, wobei der einfallende Laserstrahl in eine Vielzahl von Teillaserstrahlen überführt werden kann, die zu unterschiedlichen Einzelfoki geführt werden. Die Strahlformung umfasst hierbei die Ausgestaltung der Multifokusverteilung. Die Strahlformung kann hierbei aber auch die Ausgestaltung der Einzelfoki umfassen, wie beispielsweise das Ausbilden von Gauß'schen oder nicht-beugenden Laserstrahlen.

Beispielsweise kann ein Laser eine Energie von 10mJ pro Pulszug abgeben. Beispielsweise kann die Pulsenergie zur Formung eines Dimples 20µJ betragen, so dass pro Pulszug etwa 500 Dimples erzeugt werden können. Bei einer typischen Repetitionsrate von 30kHz entspricht dies einer mittleren Leistung von 300W.

Es ist aber auch möglich, dass ein Einzelpuls eine Energie von 1mJ aufweist und der Einzelpuls durch die Strahlformungsvorrichtung auf 50 Teillaserstrahl aufgeteilt wird, wobei jeder Teillaserstrahl eine Energie von 20µJ führt. Jeder Teillaserstrahl kann dann in einen einzelnen Laserfokus auf der Oberfläche des Materials überführt werden, so dass jeder Teillaserstrahl des Einzelpulses einen Dimple erzeugt.

Es ist insbesondere möglich, dass die Multifokusverteilung einen Intensitätsgradienten aufweist, insbesondere die Einzelfoki der Multifokusverteilung mindestens teilweise verschiedene Intensitäten aufweisen.

Insbesondere können demnach verschiedene Laserfoki verschiedene Laserenergien aufweisen. Indem die Laserenergie die Größe des Dimples durch die Isointensitätsfläche bestimmt, können durch eine unterschiedliche Verteilung der Energien im Laserfokus auch unterschiedlich große Dimples erzeugt werden.

Die Strahlformungsvorrichtung kann ein akustooptischer Deflektors und/oder ein Mikrolinsenarray und/oder ein diffraktives optisches Element sein.

Ein diffraktives optisches Element ist dazu eingerichtet, den einfallenden Laserstrahl in zwei Raumdimensionen in einer oder mehreren Eigenschaften zu beeinflussen. Typischerweise ist ein diffraktives optisches Element ein speziell ausgeformtes Beugungsgitter, wobei durch die Beugung der einfallende Laserstrahl in die gewünschte Strahlform gebracht wird.

In einem akustooptischen Deflektor wird mit einer Wechselspannung an einem Piezokristall in einem optisch angrenzenden Material eine akustische Welle erzeugt, die den Brechungsindex des Materials periodisch moduliert. Die Welle kann hierbei durch das optische Material propagieren, beispielsweise als propagierende Welle oder als Wellenpaket, oder als stehende Welle ausgebildet sein. Durch die periodische Modulation des Brechungsindex wird hierbei ein Beugungsgitter für einen einfallenden Laserstrahl realisiert. Ein einfallender Laserstrahl wird an dem Beugungsgitter gebeugt und dadurch zumindest teilweise unter einem Winkel zu seiner ursprünglichen Strahlausbreitungsrichtung abgelenkt. Die Gitterkonstante des Beugungsgitters und somit der Ablenkwinkel hängt dabei unter anderem von der Wellenlänge der akustischen Welle ab und dadurch von der Frequenz der angelegten Wechselspannung. Über eine Kombination von zwei akustooptischen Deflektoren in einer Deflektoren-Einheit lassen sich so beispielsweise Ablenkungen in x- und y-Richtung erzeugen.

Der akustooptische Deflektor kann insbesondere eine polarisationsabhängiger akustooptischer Deflektor sein und dadurch besonders leistungstauglich sein. Beispielswiese kann die aktusooptische Deflektoren-Einheit eine Deflektoren-Einheit auf Quarzbasis sein.

Mikrolinsenarrays umfassen Anordnungen von mehreren Mikrolinsen. Mikrolinsen sind hierbei kleine Linsen, insbesondere Linsen mit einem typischen Abstand Linsenmitte zu Linsenmitte ("Pitch") von 0,1 bis 10 mm bevorzugt 1 mm, wobei jede Einzellinse der Anordnung die Wirkung einer normalen, makroskopischen Linse aufweisen kann. Mit den mehreren Mikrolinsenarrays wird aus dem (zumindest im Wesentlichen) kollimierten Eingangslaserstrahl ein Winkelspektrum erzeugt, wobei je nach Abstand der Mikrolinsenarrays durch Interferenz- und Beugungseffekte eine Vielzahl an Teillaserstrahlen entstehen. Aus der variablen Veränderung des Interferenzmusters folgt eine Variation der Anzahl an Teillaserstrahlen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: einen schematischen Aufbau zum Erzeugen von Dimples;
- Figur 2A, B, C, D: eine schematische Darstellung einer Multifokusverteilung;
- Figur 3: eine mikroskopische Aufnahme eines transparenten Materials mit einer zufälligen Anordnung von Dimples; und
- Figur 4: eine konfokale Mikroskopaufnahme eines transparenten Materials mit einer zufälligen Anordnung von Dimples.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

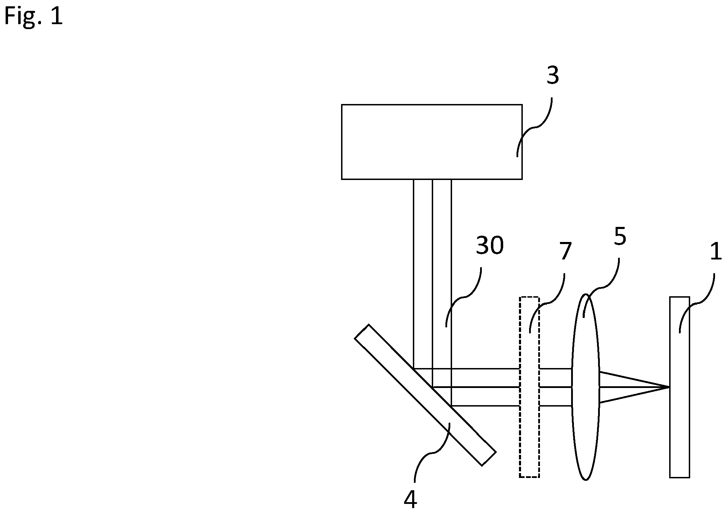

In Figur 1 ist schematisch eine Vorrichtung zum Erzeugen von Dimples 2 gezeigt. Die Vorrichtung weist hierbei einen Laser 3 auf der Laserpulse 300 erzeugt, die entlang des Laserstrahls 30 propagieren und durch eine Bearbeitungsoptik 5 auf die Oberfläche des transparenten Materials 1 fokussiert werden.

Die Laserpulse 300 können dann auf der Oberfläche des transparenten Materials Dimples 2 und LIPSS erzeugen.

Die Vorschubvorrichtung 4 kann das transparente Material 1 und den Laserstrahl 30 relativ zueinander bewegen, so dass der Laserstrahl 30 beispielsweise entlang der Vorschubtrajektorie mit einem Vorschub bewegt wird. Beispielsweise ist hier die Vorschubvorrichtung 4 als Scannervorrichtung ausgebildet, mit der der Laserstrahl 30 über das transparente Material 1 gefahren wird.

Beispielsweise können während des Vorschubs der Vorschubvorrichtung 4 die Laserpulse 300 des Laser 3 mit einem Zufallsgenerator ausgelöst werden, so dass eine zufällige Verteilung der Dimples 2 auf der Oberfläche des transparenten Materials 1 entsteht (nicht gezeigt). Es kann aber auch sein, dass die Vorschubvorrichtung 4 durch einen Zufallsgenerator eine spontane Umpositionierung des Laserstrahls 30 vornimmt, so dass eine zufällige Verteilung der Dimples 2 auf der Oberfläche des transparenten Materials 1 entsteht (nicht gezeigt). Insbesondere können sowohl die Vorschubvorrichtung 4 als auch die Pulsauslösung des Lasers 3 durch einen solchen Zufallsgenerator ausgelöst werden, so dass eine möglichst zufällige Verteilung der Dimples 2 auf der Oberfläche des transparenten Materials 1 entsteht (nicht gezeigt).

Im Allgemeinen können während des Vorschubs der Vorschubvorrichtung 4 die Laserpulse 300 des Lasers 3 auch regelmäßig ausgelöst werden.

Zusätzlich kann in dem Strahlengang auch eine Strahlformungsvorrichtung 7 angeordnet werden, die dem Laserstrahl 30 eine Multifokusverteilung 70 aufprägen kann, so dass durch die Bearbeitungsoptik eine Vielzahl von Einzelfoki auf der Oberfläche des transparenten Materials 1 entstehen.

Um Dimples 2 zu erzeugen beträgt entsprechend der Erfindung die mittlere emittierte Laserleistung am Laserausgang zwischen 30W und 1000 W, bevorzugt zwischen 30W und 300W betragen, so dass viele Dimples 2 mit dem Laserstrahl pro Sekunde erzeugt werden können. Zudem kann die Laserpulsdauer zwischen 300fs und 10ps betragen oder zwischen 100ps und 100ns betragen.

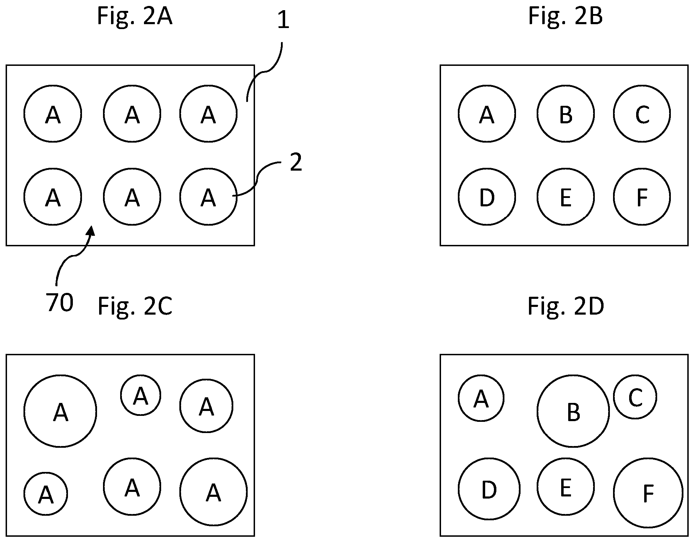

Bei diesen mittleren Laserleistungen werden Dimples 2 mit einem einzigen Laserpuls 300 oder einem einzigen Laserburst erzeugt, erdem wie in Figur 2 gezeigt.

Beispielsweise ist in Figur 2A gezeigt, dass ein einzelner Laserpuls 300 durch eine Strahlformungsvorrichtung 7 in eine Multifokusverteilung 70 geformt werden kann. Dann können aus einem einzelnen Laserpuls 300 verschiedene Dimples 2 erzeugt werden. Es ist aber auch möglich, dass in alle Einzelfoki alle Laserpulse 300, hier durchnummeriert mit A, B, ..., F, eines Laserbursts geleitet werden. Es ist aber auch möglich, dass die Strahlformungsvorrichtung 7 eine schnelle Umpositionierung des Laserstrahls 30 vornimmt, so dass ein oder mehrere Laserpulse 300 des Laserbursts an unterschiedlichen Orten der Oberfläche des transparenten Materials 1 angeordnet werden, wie in Fig. 2B gezeigt.

Die Multifokusverteilung 70 kann jedoch auch einen Intensitätsgradienten aufweisen, wie in Figur 2C gezeigt ist. Hierbei weist jeder Einzelfokus eine unterschiedliche Intensität auf, so dass die eingebrachten Dimples 2 eine unterschiedliche Größe aufweisen. Zudem kann durch die Multifokusverteilung 70 auch eine zufällige Anordnung der Dimples 2 erreicht werden.

Es ist aber auch möglich, dass die nacheinander umpositionierten Laserpulse 300 des Laserbursts eine unterschiedliche Intensität aufweisen, wie in Figur 2D gezeigt. Auch hier weisen die Dimples 2 dann eine unterschiedliche Größe auf.

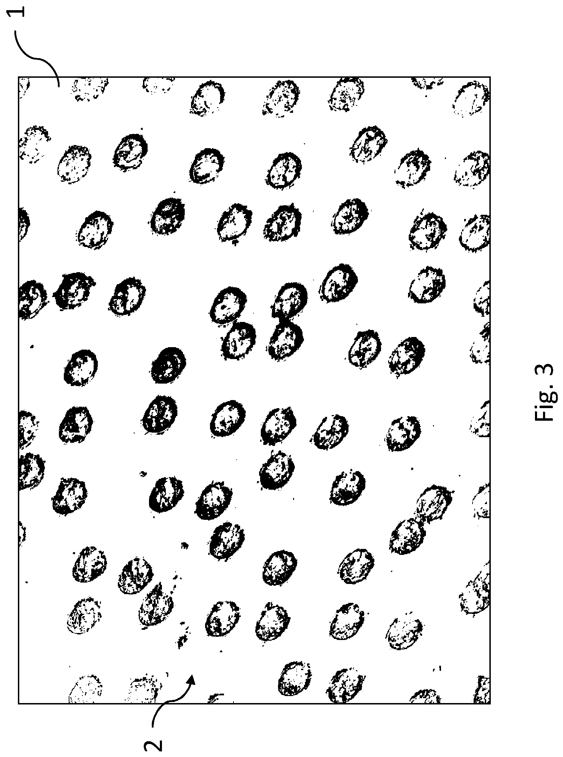

Figur 3 zeigt eine Mikroskopaufnahme eines transparenten Materials 1 mit einer durch Dimples 2 belegten Oberfläche. Der Oberfläche des transparenten Materials 1 wurden durch entsprechende Laserpulse 300 eines Lasers 3, beispielsweise durch zwei Laserpulse 300 eines Laserbursts, sogenannte Dimples 2 aufgeprägt. Die Dimples 2 machen sich als runde bis ovale ablatierte Fehlstellen in der Oberfläche des transparenten Materials 1 bemerkbar. Insbesondere kann jeder Dimple 2 einzeln durch je zwei Laserpulse eines Laserbursts erzeugt werden.

Das transparente Material 1 kann beispielsweise Saphir oder Quarzglas sein.

Wie in Figur 3 zu sehen können die Dimples 2 zufällig auf der Oberfläche des transparenten Materials angeordnet sein, wobei die Dimples 2 auch teilweise überlappen oder aneinander anschließend vorliegen können. Indem die Dimples 2 in einem unregelmäßigen Muster auf die Oberfläche des transparenten Materials 1 aufgebracht werden, kann insbesondere die direkte Reflexion eines einfallenden Lichtstrahls unterdrückt werden, da der einfallende Lichtstrahl durch die Dimples 2 in eine Vielzahl von Teilstrahlen gebrochen und wegreflektiert wird.

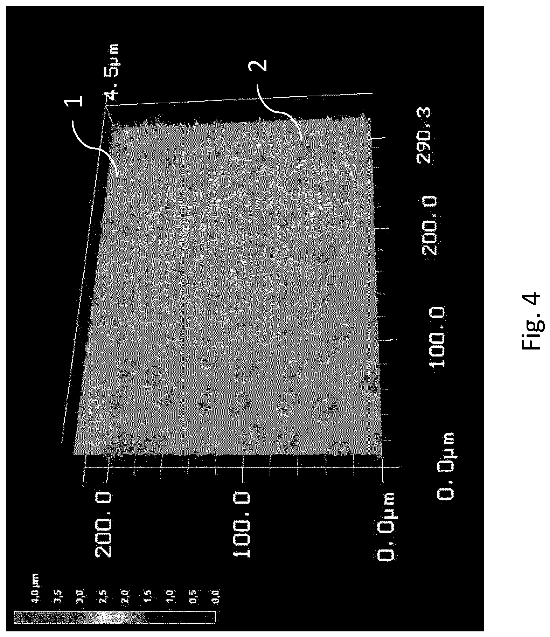

In der bemaßten konfokalen Mikroskopaufnahme der Figur 4 ist dasselbe transparente Material 1 gezeigt. Die Dimples 2 weisen eine Tiefe zwischen 100nm und 2000nm auf, beispielsweise 500nm. Die Dimples 2 weisen zudem einen Durchmesser zwischen 3µm und 25µm auf, beispielsweise 20µm. Die Dimples 2 weisen zudem eine Größenvariation zum Durchmesser zwischen 5% und 80% auf, beispielsweise 10%. Zudem beträgt die Flächenfüllung der Oberfläche mit den Dimples 2 zwischen 20% und 95% beispielsweise 30%.

Beispielsweise kann das transparente Material 1 auf dem Displaypanel eines Smart Devices angeordnet werden, so dass das transparente Material 1 als Schutz- oder Deckschicht fungiert. Insbesondere kann dadurch auch die haptische Wertigkeit durch die Rauigkeit des transparenten Materials 1 durch die Dimplegröße eingestellt werden. Zudem kann durch die eine zufällige Anordnung der Dimples 2 und/oder eine Dimplegröße, die geringer als die Pixelgröße ist, das Ausbilden eines Moiré-Effekts vermieden werden (nicht gezeigt).

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: transparentes Material
- 2: Dimple
- 3: Laser
- 30: Laserstrahl
- 300: Laserpulse
- 4: Vorschubvorrichtung
- 5: Bearbeitungsoptik
- 7: Strahlformungsvorrichtung

## Patentansprüche

1. Verfahren zum Erzeugen von Dimples (2) auf der Oberfläche eines transparenten Materials (1) mit Laserpulsen (300) eines Kurzpulslasers (3), wobei mit einem einzigen Laserpuls (300) oder einem einzigen Laserburst mindestens ein Dimple (2) erzeugt wird,
**dadurch gekennzeichnet, dass** die mittlere emittierte Laserleistung am Laserausgang zwischen 30W und 1000W beträgt, bevorzugt zwischen 30W und 300W beträgt.

2. Verfahren nach Anspruch 1, **dadurch gekennzeichnet, dass** die Laserpulsdauer zwischen 300fs und 10ps beträgt oder zwischen 100ps und 100ns beträgt.

3. Verfahren nach Anspruch 1 oder 2, **dadurch gekennzeichnet, dass** der mindestens eine Dimple (2) mit einem Laserburst erzeugt wird, wobei der Laserburst zwischen 2 und 10 Laserpulse umfasst und der zeitliche Abstand der Laserpulse zwischen 10ns bis 50ns beträgt.

4. Verfahren nach Anspruch 1 oder 2, **dadurch gekennzeichnet, dass** der mindestens eine Dimple (2) mit einem Laserburst erzeugt wird, wobei der Laserburst zwischen 30 und 300 Laserpulse umfasst und der zeitliche Abstand der Laserpulse zwischen 100ps bis 1000ps beträgt.

5. Verfahren nach einem der vorherigen Ansprüche, **dadurch gekennzeichnet, dass** mindestens zwei Laserpulse eines Laserbursts räumlich überlappen, wobei laserinduzierte periodische Oberflächenstrukturen erzeugt werden.

6. Verfahren nach einem der vorherigen Ansprüche, **dadurch gekennzeichnet, dass** das der Polarisationsgrad des Lasers (3) mehr als 80%, bevorzugt mehr als 95% beträgt.

7. Verfahren nach einem der vorherigen Ansprüche, **dadurch gekennzeichnet, dass** die Photonenenergie der Laserpulse oder Laserbursts kleiner als die Bandlücke des Materials ist.

8. Verfahren nach einem der vorherigen Ansprüche, **dadurch gekennzeichnet, dass** der Laserstrahl (30) und das transparente Material (1) relativ zueinander mit einer Vorschubvorrichtung (4) verschoben werden können.

9. Verfahren nach einem der vorherigen Ansprüche, **dadurch gekennzeichnet, dass** der der Laserstrahl (30) durch eine Bearbeitungsoptik (5) auf die Oberfläche des transparenten Materials (1) fokussiert wird.

10. Verfahren nach einem der vorherigen Ansprüche, **dadurch gekennzeichnet, dass** die Dimples (2) zufällig auf der Oberfläche des transparenten Materials (1) positioniert werden.

11. Verfahren nach einem der vorherigen Ansprüche, **dadurch gekennzeichnet, dass** der Laserstrahl (30) mittels einer Strahlformungsvorrichtung (7) in eine Multifokusverteilung geformt wird und die Oberfläche mit der Multifokusverteilung beaufschlagt wird und somit mehrere Dimples (1) mit einem einzigen Laserpuls oder einem einzigen Laserburst erzeugt werden.

12. Verfahren nach einem der vorherigen Ansprüche, **dadurch gekennzeichnet, dass** die Multifokusverteilung einen Intensitätsgradienten aufweist, insbesondere die Einzelfoki der Multifokusverteilung mindestens teilweise verschiedene Intensitäten aufweisen.

13. Verfahren nach einem der vorherigen Ansprüche, **dadurch gekennzeichnet, dass** die Strahlformungsvorrichtung (7) ein akustooptischer Deflektor und/oder ein Mikrolinsenarray und/oder ein diffraktives optisches Element ist.

## Claims

1. A method for creating dimples (2) on the surface of a transparent material (1) using laser pulses (300) from a short-pulse laser (3), wherein at least one dimple (2) is created with a single laser pulse (300) or a single laser burst, **characterized in that** the average laser power emitted at the laser output is between 30 W and 1000 W, preferably between 30 W and 300 W.

2. The method according to claim 1, **characterized in that** the laser pulse duration is between 300 fs and 10 ps or between 100 ps and 100 ns.

3. The method according to claim 1 or 2, **characterized in that** the at least one dimple (2) is created with a laser burst, wherein the laser burst comprises between 2 and 10 laser pulses and the time interval between the laser pulses is between 10 ns and 50 ns.

4. The method according to claim 1 or 2, **characterized in that** the at least one dimple (2) is created with a laser burst, wherein the laser burst comprises between 30 and 300 laser pulses and the time interval between the laser pulses is between 100 ps and 1000 ps.

5. The method according to one of the preceding claims, **characterized in that** at least two laser pulses of a laser burst overlap spatially, wherein laser-induced periodic surface structures are created.

6. The method according to one of the preceding claims, **characterized in that** the degree of polarization of the laser (3) is greater than 80%, preferably greater than 95%.

7. The method according to one of the preceding claims, **characterized in that** the photon energy of the laser pulses or laser bursts is less than the bandgap of the material.

8. The method according to one of the preceding claims, **characterized in that** the laser beam (30) and the transparent material (1) can be moved relative to one another by means of a feed device (4).

9. The method according to one of the preceding claims, **characterized in that** the laser beam (30) is focused onto the surface of the transparent material (1) by a processing optical system (5).

10. The method according to one of the preceding claims, **characterized in that** the dimples (2) are positioned randomly on the surface of the transparent material (1).

11. The method according to one of the preceding claims, **characterized in that** the laser beam (30) is shaped into a multifocal distribution by means of a beam-shaping device (7), and the surface is irradiated with the multifocal distribution, thereby creating multiple dimples (1) with a single laser pulse or a single laser burst.

12. The method according to one of the preceding claims, **characterized in that** the multifocal distribution has an intensity gradient; in particular, the individual foci of the multifocal distribution have, at least in part, different intensities.

13. The method according to one of the preceding claims, **characterized in that** the beam-shaping device (7) is an acousto-optic deflector and/or a microlens array and/or a diffractive optical element.

## Revendications

1. Procédé de génération de dépressions (2) sur la surface d'un matériau transparent (1) au moyen d'impulsions laser (300) d'un laser à impulsions courtes (3), dans lequel au moins une dépression (2) est générée au moyen d'une seule impulsion laser (300) ou d'un seul paquet d'impulsions laser (Laserburst), **caractérisé en ce que** la puissance laser moyenne émise à la sortie du laser est comprise entre 30 W et 1000 W, de préférence entre 30 W et 300 W.

2. Procédé selon la revendication 1, **caractérisé en ce que** la durée d'impulsion laser est comprise entre 300 fs et 10 ps ou est comprise entre 100 ps et 100 ns.

3. Procédé selon la revendication 1 ou 2, **caractérisé en ce que** ladite au moins une dépression (2) est générée au moyen d'un paquet d'impulsions laser (Laserburst), dans lequel le paquet d'impulsions laser (Laserburst) comprend entre 2 et 10 impulsions laser et l'intervalle temporel des impulsions laser est compris entre 10 ns et 50 ns.

4. Procédé selon la revendication 1 ou 2, **caractérisé en ce que** ladite au moins une dépression (2) est générée au moyen d'un paquet d'impulsions laser (Laserburst), dans lequel le paquet d'impulsions laser (Laserburst) comprend entre 30 et 300 impulsions laser et l'intervalle temporel des impulsions laser est compris entre 100 ps et 1000 ps.

5. Procédé selon l'une quelconque des revendications précédentes, **caractérisé en ce qu'**au moins deux impulsions laser d'un paquet d'impulsions laser (Laserburst) se chevauchent spatialement, dans lequel des structures de surface périodiques induites par laser sont générées.

6. Procédé selon l'une quelconque des revendications précédentes, **caractérisé en ce que** le degré de polarisation du laser (3) est supérieur à 80 %, de préférence supérieur à 95 %.

7. Procédé selon l'une quelconque des revendications précédentes, **caractérisé en ce que** l'énergie photonique des impulsions laser ou des paquets d'impulsions laser (Laserbursts) est inférieure à la bande interdite du matériau.

8. Procédé selon l'une quelconque des revendications précédentes, **caractérisé en ce que** le faisceau laser (30) et le matériau transparent (1) peuvent être déplacés l'un par rapport à l'autre au moyen d'un dispositif d'avance (4).

9. Procédé selon l'une quelconque des revendications précédentes, **caractérisé en ce que** le faisceau laser (30) est focalisé sur la surface du matériau transparent (1) par une optique d'usinage (5).

10. Procédé selon l'une quelconque des revendications précédentes, **caractérisé en ce que** les dépressions (2) sont positionnées de manière aléatoire sur la surface du matériau transparent (1).

11. Procédé selon l'une quelconque des revendications précédentes, **caractérisé en ce que** le faisceau laser (30) est façonné au moyen d'un dispositif de mise en forme du faisceau (7) en une distribution multifocale et que la surface est soumise à la distribution multifocale, de sorte que plusieurs dépressions (1) sont générées au moyen d'une seule impulsion laser ou d'un seul paquet d'impulsions laser (Laserburst).

12. Procédé selon l'une quelconque des revendications précédentes, **caractérisé en ce que** la distribution multifocale présente un gradient d'intensité, en particulier les foyers individuels de la distribution multifocale présentent au moins partiellement des intensités différentes.

13. Procédé selon l'une quelconque des revendications précédentes, **caractérisé en ce que** le dispositif de mise en forme du faisceau (7) est un déflecteur acousto-optique et/ou un réseau de microlentilles et/ou un élément optique diffractif.
